# EUROPÄISCHE PATENTSCHRIFT

(11) **EP 0 358 060 B1**
(45) Veröffentlichungstag und Bekanntmachung des Hinweises auf die Patenterteilung: **19.01.1994**
(21) Anmeldenummer: 89115682.0
(22) Anmeldetag: 25.08.1989
(51) Int. Cl.: G02B 23/18

(54) **Binokulares Fernrohr**
Binoculars
Jumelles

(30) Priorität: 09.09.1988 DE 3830620
(43) Veröffentlichungstag der Anmeldung: 14.03.1990
(73) Patentinhaber: Leica Camera GmbH, D-35606 Solms (DE)
(72) Erfinder: Farnung, H. Peter, D-6350 Bad Nauheim (DE); Keiner, Heinz, D-6336 Solms (DE); Hengst, Alfred, D-6335 Lahnau 2 (DE)

(56) Entgegenhaltungen:
- EP-A- 0 030 324
- EP-A- 0 152 056
- EP-A- 0 207 332
- DE-A- 2 950 204
- US-A- 4 030 808
- US-A- 4 202 598

## Beschreibung

Die Erfindung betrifft ein binokulares Fernrohr mit einer die beiden Rohre verbindenden Gelenkbrücke und einem Mitteltrieb zur gemeinsamen Verstellung von innerhalb der Rohre gelagerten Fokussiergliedern.

Aus dem DE-GM 1 694 491 ist ein derartiges binokulares Fernrohr mit Innenfokussierung bekannt. Außer der gemeinsamen Verstellung der beiden Fokussierglieder ist bei diesem Fernrohr auch eine Einzelverstellung eines Fokussiergliedes in einem der Rohre zum Ausgleich von Sehunterschieden zwischen den Augen eines Benutzers, eine sogenannte Dioptrieneinstellung, möglich. Dazu ist der Mitteltrieb für die gemeinsame Verstellung der beiden Fokussierglieder von dem Fokussierglied des einen Rohres abkuppelbar, so daß nur dieses Fokussierglied verstellt wird. Im einzelnen ist bei diesem bekannten Fernrohr im Drehgelenk der beiden Rohre ein Drehknopf mit einer auf das eine Fokussierglied wirkenden Achse gelagert, die von einer Hohlachse und einem unter Federwirkung stehenden hohlen Drehknopf umgeben sind, welche auf das andere Fokussierglied wirken.

Die beiden Drehknöpfe sind durch eine Reibungskupplung miteinander verbunden, welche durch Eindrücken des äusseren Drehknopfes gegen die Federwirkung gelöst werden kann. Eine voneinander unabhängige Einstellung der Fokussierglieder beider Rohre, die damit in beliebiger Reihenfolge vorgenommen werden kann, ist bei diesem Fernglas nicht möglich.

Aus der DE-OS 29 50 204 ist ein binokulares Fernrohr bekannt, das neben einer Einrichtung zur Einstellung einer veränderlichen Vergroßerung auch einen Mitteltrieb aus zwei koaxialen Einstellknöpfen für die Fokussierung und die Dioptrieneinstellung aufweist. Die beiden Einstellknöpfe sind über einen Sperrstift verbunden und werden zur Fokussierung gleichzeitig gedreht. Zur Dioptrieneinstellung muß der Fokuseinstellknopf festgehalten und der Dioptrieneinstellknopf gedreht werden. Die Einstellknöpfe wirken ausserdem auf Objektivlinsenrahmen in beiden Rohren unter Verschiebung der Objektive längs der optischen Achse, so daß dieses bekannte Fernrohr keine Innenfokussierung aufweist.

Der Erfindung liegt daher die Aufgabe zugrunde, ein binokulares Fernrohr der eingangs genannten Art zu schaffen, dessen beide Fokussierglieder bei unverändertem Abstand zwischen Okularen und Objektiven sowohl gemeinsam als auch unabhängig voneinander, d. h. einzeln und in beliebiger Reihenfolge, reibungsarm und nahezu spielfrei in den Rohren bewegbar sind, wobei versehentliche Verstellungen nur eines Fokussierglieds ausgeschlossen sind.

Diese Aufgabe wird erfindungsgemäß gelöst durch die Merkmale des kennzeichnenden Teils des Anspruchs 1.

Auf diese Weise wird der Benutzer in die Lage versetzt, entsprechend der Sehschärfe seiner Augen jedes der beiden Rohre einzeln scharf zu stellen, wobei es gleichgültig ist, mit welchem Rohr begonnen wird. Anschließend genügt ein Druck auf den augennahen Einstellring, um diesen mit dem anderen Einstellring zu verbinden und sodann eine gemeinsame Entfernungseinstellung vorzunehmen.

Durch diese Anordnung ist gleichzeitig eine bedienungsfreundliche Einstellung des binokularen Fernrohrs mit nur einer Hand gewährleistet.

Gemäß einer bevorzugten Ausführungsform der Erfindung kann vorgesehen sein, daß in eine Ringnut eines mit dem ersten Einstellring drehfest verbundenen Mitnehmerrings einzelne Segmentbögen einsetzbar sind, welche einerseits mit einem angeformten Zapfen in eine radiale Bohrung des Mitnehmerrings eingreifen und andererseits mit einer axial verlaufenden Verzahnung auf einer Außenfläche an den zweiten Einstellring kuppelbar sind. Dadurch wird eine formschlüssige Kupplung zwischen den beiden Einstellringen erreicht.

Weitere vorteilhafte Ausgestaltungen ergeben sich aus den Unteransprüchen.

Aus der nachfolgenden Beschreibung eines in der Zeichnung schematisch dargestellten Ausführungsbeispiels gehen Einzelheiten der Erfindung hervor. Alle zum Verständnis derselben nicht notwendigen Teile sind der Übersichtlichkeit wegen weggelassen oder nicht bezeichnet worden. Es zeigen:
- Fig. 1: eine teilweise geschnittene Vorderansicht des erfindungsgemäßen binokularen Fernrohrs mit den beiden Einstellringen im gekuppelten Zustand und
- Fig. 2: eine Ansicht eines Segmentbogens.

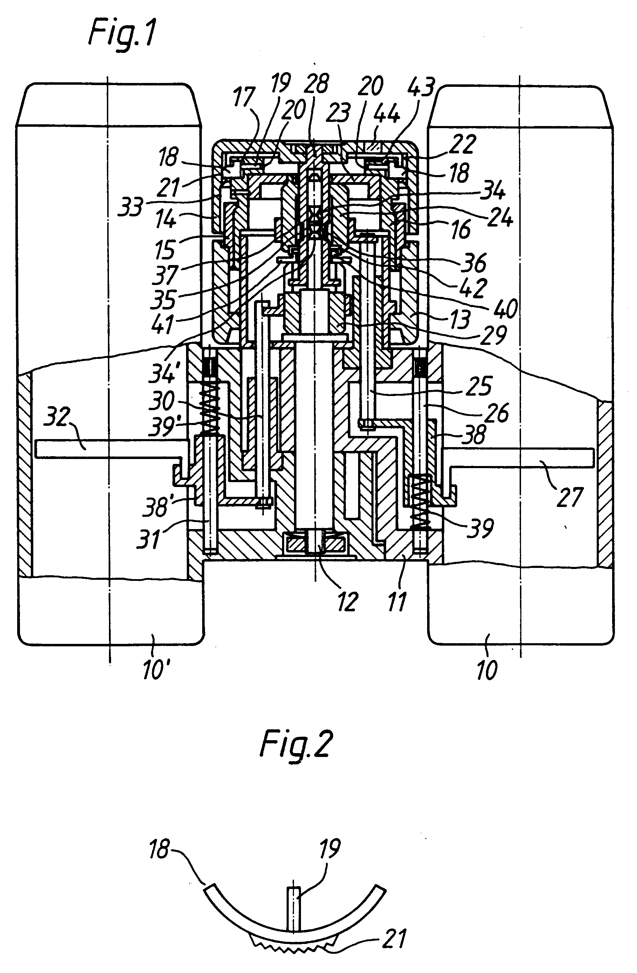

Bei dem in Fig. 1 geschnitten gezeigten Fernrohr ist ein linkes Rohr 10 mittels einer Gelenkbrücke 11 mit einem im Aufbau gleichen rechten Rohr 10′ verbunden. In der Gelenkbrücke 11 zwischen den Rohren 10,10′ ist eine zentrale Achse 12 montiert, auf welcher koaxial ein erster Einstellring 13 und ein zweiter oberer Einstellring 14 angeordnet sind, die zusammen den Mitteltrieb des binokularen Fernrohrs bilden. In Fig. 1 sind die beiden Einstellringe 13,14 im gekuppelten Zustand gezeigt. Der erste Einstellring 13 ist dazu mittels eines Konterrings 15 mit einem Mitnehmerring 16 drehfest verbunden, der im oberen Abschnitt eine Ringnut 17 aufweist, in welche einzelne Segmentbögen 18 einsetzbar sind (Fig. 2). Im einzelnen greift dabei ein angeformter Zapfen 19 des Segmentbogens 18 in eine radiale Bohrung 20 des Mitnehmerringes 16 ein, und eine axial gerichtete Verzahnung 21 auf der Außenfläche des Segmentbogens 18 stellt die formschlüssige Verbindung mit einer entsprechenden Innenverzahnung 22 des oberen, zweiten Einstellrings 14 her. Eine Drehbewegung des ersten Einstellrings 13 wird einerseits mittels des Konterrings 15, des Mitnehmerrings 16, einer Mitnehmerscheibe 23 und einer Schnecke 24 auf eine Übertragungsstange 25, eine Halterung 38 und ein damit verbundenes Fokussierglied 27 übertragen, das im linken Rohr 10 spielfrei geführt und verschiebbar ist. Andererseits wird die Drehbewegung des ersten Einstellrings 13 aufgrund der formschlüssigen Kupplung mit dem zweiten Einstellring 14 über eine auf der zentralen Achse 12 angeordnete Rastbuchse 28 auch auf eine Schnecke 29 übertragen, die in eine entsprechende Ubertragungsstange 30 eingreift, welche mit einer Halterung 38 verbunden ist.

In letzterer ist wiederum ein Führungsstab 31 gelagert. Ein Fokussierglied 32 für das rechte Rohr 10′ des binokularen Fernrohres ist auch in diesem spielfrei geführt und verschiebbar.

Es ist zu erkennen, daß in gleicher Weise eine Drehbewegung des zweiten Einstellrings 14 nicht nur auf das Fokussierglied 32 des rechten Rohres 10, sondern auch auf das Fokussierglied 27 des linken Rohres 10 übertragen wird, da die Einstellringe 13,14 über die Verzahnungen 21,22 formschlüssig miteinander gekuppelt sind. Die beiden Fokussierglieder 27,32 werden im gekuppelten Zustand der beiden Rohre 10,10′ verschoben, wobei es gleichgültig ist, welcher der beiden Einstellringe 13,14 gedreht wird.

Durch Herausziehen des zweiten Einstellrings 14 wird die formschlüssige Kupplung zum ersten Einstellring 13 getrennt, wobei die axial verlaufende Verzahnung 21 auf der Außenfläche des Segmentbogens 18 aus der Innenverzahnung 22 des zweiten Einstellrings 14 gleitet. Jeder Segmentbogen 18 ist unter radialer Vorspannung in der Ringnut 17 des Mitnehmerringes 16 montiert, so daß er beim Herausziehen des Einstellrings 14 in eine Erweiterung 33 unterhalb der Innenverzahnung 22 dieses Einstellrings gedrückt wird. Zur Sicherung des entkuppelten Zustandes der beiden Einstellringe 13,14 ist die zentrale Achse mit zwei Rillen 34,34′ versehen, in die mittels einer Feder 35 Kugeln 36 gedrückt werden, welche in einer Aussparung 37 in der Rastbuchse 28 angeordnet sind. Auf diese Weise ist der zweite Einstellring 14 in zwei Raststellungen bewegbar, während der erste Einstellring 13 axial festgelegt ist.

Im entkuppelten Zustand wird eine Drehbewegung des ersten Einstellrings 13 ersichtlich nur auf die Schnecke 24 und damit auf das Fokussierglied 27 für das linke Rohr 10 des binokularen Fernrohrs übertragen. Ebenso erfolgt beim Drehen des zweiten Einstellrings 14 nur eine Verschiebung des Fokussierglieds 32 im rechten Rohr 10′, so daß eine eigene Dioptrieneinstellung entfällt, da zunächst jedes Rohr 10,10′ für jedes Auge einzeln fokussiert wird. Durch Drücken des zweiten Einstellringes 14 wird sodann die Kupplung mit dem ersten Einstellring 13 hergestellt, wodurch beide Fokussiergiieder 27,32 gemeinsam verschoben werden, wenn einer der beiden Einstellringe 13,14 betätigt wird.

Die Führungsstäbe 26,31 für die Fokussierglieder 27,32 sind gehausefest gelagert und in Halterungen 38, 38′ geführt. Letztere sind einerseits mit den Übertragungsstangen 25,30 verbunden, während sie andererseits in die Fokussierglieder 27,32 eingreifen.

Die Führungsstäbe 26,31 sind von Ausgleichsfedern 39,39′ umgeben, welche an den Halterungen 38,38′ angreifen und das Spiel in den Übertragungsgliedern, d. h. von den Einstellringen 13,14 bis zu den Fokussiergliedern 27,37, weitgehend eliminieren. Damit die Verstellkräfte für eine Linksdrehung der gekuppelten Einstellringe 13,14 gleich denen für eine Rechtsdrehung sind, wirken die Ausgleichsfedern 39,39′ gegenläufig.

Zwischen den Schnecken 24,29 ist eine Lagerkugeln 40 tragende Lagerscheibe 41 auf der Rastbuchse 28 angeordnet. Die Lagerkugeln 40 werden von einem Lagerring 42 übergriffen, der in das untere Ende der Schnecke 24 eingesetzt ist. Das auf diese Weise gebildete Drehlager ist reibungsarm und bewirkt, daß sich im entkuppelten Zustand nur die dem jeweiligen Einstellring zugeordnete Schnecke dreht, ohne die andere mitzunehmen.

Die Scharfeinstellung des binokularen Fernrohrs erfolgt, wie bereits ausgeführt, durch Einzelverstellung der beiden Fokussierglieder 27,32 innerhalb der beiden Rohre 10,10′ mittels der entkuppelten Einstellringe 13,14. Damit der eingestellte Zustand auch bei der Entfernungseinstellung im gekuppelten Zustand der Einstellringe 13,14 erhalten bleibt, vom Benutzer jederzeit ablesbar ist und gegebenenfalls reproduziert werden kann, ist in die Oberfläche des Mitnehmerringes 16 des ersten Einstellrings 13 eine Dioptrien-Scheibe 43 mit Index eingesetzt, der ein im zweiten Einstellring 14 montiertes Sichtfenster 44 gegenüberliegt. Beim Drehen eines der beiden Einstellringe 13,14 bewegen sich auf diese Weise Dioptrienscheibe 43 und Sichtfenster 44 gleichzeitig und gleichsinnig um die zentrale Achse 12.

Es versteht sich, daß Varianten der beschriebenen Ausführungsform des binokularen Fernrohrs möglich sind. So ist es denkbar, anstelle der formschlüssigen Kupplung zwischen den beiden Einstellringen eine kraftschlüssige Kupplung in Form eines elastischen Ringes vorzusehen. Auch das Drehlager zwischen den beiden Schnecken kann abweichend ausgebildet sein.

### Bezugszeichen

- 10,10′: Rohre
- 11: Gelenkbrücke
- 12: Zentrale Achse
- 13: Erster Einstellring
- 14: Zweiter Einstellring
- 15: Konterring
- 16: Mitnehmerring
- 17: Ringnut
- 18: Segmentbogen
- 19: Zapfen
- 20: Bohrung
- 21: Verzahnung
- 22: Innenverzahnung
- 23: Mitnehmerscheibe
- 24: Schnecke
- 25: Übertragungsstange
- 26: Führungsstab
- 27: Fokussierglied
- 28: Rastbuchse
- 29: Schnecke
- 30: Übertragungsstange
- 31: Führungsstab
- §2: Fokussierglied
- 33: Erweiterung
- 34,34′: Rillen
- 35: Feder
- 36: Kugel
- 37: Aussparung
- 38,38′: Halterung
- 39,39′: Ausgleichsfeder
- 40: Lagerkugel
- 41: Lagerscheibe
- 42: Lagerring
- 43: Dioptrienscheibe
- 44: Sichtfenster

## Patentansprüche

1. Binokulares Fernrohr mit einem zwischen beiden Rohren liegenden Mitteltrieb zur gemeinsamen Verstellung von Fokussiergliedern, wobei als Mitteltrieb ein erster und ein mit diesem verbundener zweiter Einstellring koaxial auf einer zentralen Achse angeordnet ist, **dadurch gekennzeichnet**, daß beide Einstellringe (13,14) formschlüssig kuppelbar sind, derart, daß der erste Einstellring (13) axial festgelegt und der zweite Einstellring (14) axial bewegbar ist, wobei im entkuppelten Zustand jeder Einstellring (14,15) unabhängig vom anderen frei drehbar ist und jeweils einem innerhalb der Rohre (10,10') verschiebbaren Fokussierglied (27,32) zur Innenfokussierung der einzelnen Rohre (10,10') bei unverändertem Abstand zwischen Okularen und Objektiven zugeordnet ist.

2. Binokulares Fernrohr nach Anspruch 1, **dadurch gekennzeichnet,** daß in eine Ringnut (17) eines mit dem ersten Einstellring (13) drehfest verbundenen Mitnehmerringes (16) einzelne Segmentbögen (18) einsetzbar und unter Vorspannung montiert sind, welche einerseits mit einem angeformten Zapfen (19) in eine radiale Bohrung (20) des Mitnehmerringes (16) eingreifen und andererseits mittels einer axial verlaufenden Verzahnung (21) auf ihrer Außenfläche an den zweiten Einstellring (14) formschlüssig kuppelbar sind.

3. Binokulares Fernrohr nach Anspruch 1, **dadurch gekennzeichnet**, daß jeder Einstellring (13,14) mit einer koaxial auf der zentralen Achse (12) angeordneten Schnecke (24,29) verbunden ist, welche die Drehbewegung der entkuppelten Einstellringe (13,14) mittels Übertragungsstangen (25,30) und Halterungen (38, 38′) für jedes Rohr (10,10′) auf die Fokussierglieder (27,32) übertragen.

4. Binokulares Fernrohr nach Anspruch 3, **dadurch gekennzeichnet**, daß die Führungsstäbe (26,31) gehäusefest gelagert und in Halterungen (38,38′) geführt sind, welche einerseits mit den Übertragungsstangen (25,30) verbunden sind und andererseits in die Fokussierglieder (27,32) eingreifen.

5. Binokulares Fernrohr nach Anspruch 4, **dadurch gekennzeichnet**, daß an den Halterungen (38,38′) zur Erzielung gleicher Verstellkräfte gegenläufig wirkende Ausgleichsfedern (39,39′) angreifen, welche die Führungsstäbe (26,31) umgeben.

6. Binokulares Fernrohr nach Anspruch 3, **dadurch gekennzeichnet**, daß zwischen den Schnecken (24,29) ein reibungsarmes Drehlager (40,41,42) aus einer Lagerscheibe (41), einem Lagerring (42) und Lagerkugeln (40) vorgesehen ist.

7. Binokulares Fernrohr nach einem oder mehreren der vorhergehenden Ansprüche, **dadurch gekennzeichnet**, daß auf dem Mitnehmerring (16) des ersten Einstellrings (13) eine Dioptrienscheibe (43) angeordnet ist, welche durch ein im zweiten Einstellring (14) montiertes Sichtfenster (44) ablesbar ist.

## Claims

1. Binocular telescope with a central drive lying between both tubes for the common adjustment of focussing members, wherein a first adjusting ring and a second adjusting ring connected therewith are co-axially arranged on a central axle as central drive, characterised thereby, that both adjusting rings (13, 14) are couplable shape-lockingly in such a manner that the first adjusting ring (13) is axially fixed and the second adjusting ring (14) axially movable, wherein each adjusting ring (14, 15) in the uncoupled state is freely rotatable independently of the other and associated with a respective focussing member (27, 32) displaceable within the tubes (10, 10') for the internal focussing of the individual tubes (10, 10') while the spacing between the eyepieces and objectives remains unchanged.

2. Binocular telescope according to claim 1, characterised thereby, that individual segmental arcuate members (18) are insertable into and mountable under bias in an annular groove (17) of an entraining ring (16) connected rotationally secured with the first adjusting ring (13) and the one hand engage by a shaped-on spigot (19) into a radial bore (20) of the entraining ring (16) and on the other hand are couplable shape-lockingly to the second adjusting ring (14) by means of an axially extending toothing (21) on their outward surface.

3. Binocular telescope according to claim 1, characterised thereby, that each adjusting ring (14, 15) is connected with a respective worm (24, 29), which is co-axially arranged on the central axle (12) and transmits the rotational movement of the uncoupled adjusting ring (13 or 14) by means of a transmission rod (25 or 30) and mounting (38 or 38') for each tube (10 or 10') to the focussing member (27 or 32).

4. Binocular telescope according to claim 3, characterised thereby, that the guide rods (26, 31) are borne fast with the housing and guided in mountings (38, 38'), which on the one hand are connected with the transmission rods (25, 30) and on the other hand engage into the focussing members (27, 32).

5. Binocular telescope according to claim 4, characterised thereby, that equalising springs (39, 39'), which surround the guide rods (26, 31) and act in opposite sense, engage at the mountings (38, 38') for the achievement of equal displacing forces.

6. Binocular telescope according to claim 3, characterised thereby, that a low-friction bearing (40, 41, 42) of a bearing washer (41), a bearing ring (42) and bearing balls (40) is provided between the worms (24, 29).

7. Binocular telescope according to one or more of the preceding claims, characterised thereby, that a dioptre plate (43), which can be read off through a viewing window (44) mounted in the second adjusting ring (14), is arranged on the entraining ring (16) of the first adjusting ring (13).

## Revendications

1. Lunettes binoculaires avec un entraînement central situé entre les deux tubes pour le réglage commun d'éléments de focalisation, comme entraînement central, une première bague de réglage et une deuxième reliée à celle-ci sont disposées coaxialement sur un axe central, caractérisées en ce que les deux bagues de réglage (13, 14) peuvent être accouplées par concordance des formes de façon que la première bague de réglage (13) soit fixe axialement et que la deuxième bague de réglage (14) soit déplaçable axialement, et dans l'état désacouplé, chacune des bagues de réglage (14, 15) pouvant tourner librement indépendamment de l'autre et est associée respectivement à un élément de focalisation (27, 32) déplaçable à l'intérieur des tubes (10, 10') pour la focalisation intérieure des tubes individuels (10, 10'), l'écart entre les oculaires et les objectifs étant inchangé.

2. Lunettes binoculaires selon la revendication 1, caractérisées en ce que des arcs de segment individuels (18) peuvent être placés dans une rainure annulaire (17) d'une bague d'entraînement (16) reliée de manière fixe en rotation à la première bague de réglage (13) et sont montés sous précontrainte, qui viennent en prise d'une part avec un pivot venu de moulage (19) dans un perçage radial (20) de la bague d'entraînement (16) et qui peuvent être accouplés par concordance des formes d'autre part au moyen d'une denture (21) s'étendant axialement sur leur surface extérieure avec la deuxième bague de réglage (14).

3. Lunettes binoculaires selon la revendication 1, caractérisées en ce que chaque bague de réglage (13, 14) est reliée à une vis sans fin (24, 29) disposée coaxialement sur l'axe central (12), qui transmettent le mouvement de rotation des bagues de réglage désaccouplées (13, 14) au moyen de tiges de transfert (25, 30) et des éléments de maintien (38, 38') pour chaque tube (10, 10') sur les éléments de focalisation (27, 32).

4. Lunettes binoculaires selon la revendication 3, caractérisées en ce que les tiges de guidage (26, 31) sont logées de manière fixe dans le boîtier et sont guidées dans des éléments de maintien (38, 38') qui sont reliés d'une part aux tiges de transfert (25, 30) et qui viennent en prise d'autre part avec les éléments de focalisation (27, 32).

5. Lunettes binoculaires selon la revendication 4, caractérisées en ce que des ressorts compensateurs (39, 39') agissant en sens contraire viennent en prise avec les éléments de maintien (38, 38') pour réaliser des forces de réglage identiques, et qui entourent les tiges de guidage (26, 31).

6. Lunettes binoculaires selon la revendication 3, caractérisées en ce qu'il est prévu entre les vis sans fin (24, 29) un palier de pivotement de faible frottement (40, 41, 42) constitué d'un disque de palier (41), d'une bague de palier (42) et de billes de palier (40).

7. Lunettes binoculaires selon l'une ou plusieurs des revendications précédentes, caractérisées en ce qu'un disque à dioptries (43) est disposé sur la bague d'entraînement (16) de la première bague de réglage (13), qui peut être lu par une fenêtre de visée (44) montée dans la deuxième bague de réglage (14).
